# EUROPEAN PATENT SPECIFICATION

(11) **EP 3 238 960 B1**
(45) Date of publication and mention of the grant of the patent: **04.03.2020**
(21) Application number: 16181903.2
(22) Date of filing: 29.07.2016
(51) Int. Cl.: B60C 11/16

(54) **STUD PIN, PNEUMATIC TIRE, METHOD FOR MANUFACTURING PNEUMATIC TIRE, AND METHOD FOR INSTALLING STUD PIN**
SPIKESTIFT, LUFTREIFEN, VERFAHREN ZUR HERSTELLUNG DES LUFTREIFENS UND VERFAHREN ZUR INSTALLATION DES SPIKESTIFTS
GOUJON, PNEUMATIQUE, PROCÉDÉ DE FABRICATION DE PNEUMATIQUE, ET PROCÉDÉ D'INSTALLATION DE GOUJON

(30) Priority: 28.04.2016 JP 2016090135
(43) Date of publication of application: 01.11.2017
(73) Proprietor: The Yokohama Rubber Co., Ltd., Tokyo 105-8685 (JP)
(72) Inventor: Matsumoto, Kenichi, Hiratsuka-shi, Kanagawa 254-8601 (JP)
(74) Representative: Dilg, Haeusler, Schindelmann Patentanwaltsgesellschaft mbH

(56) References cited:
- EP-A1- 2 933 121
- CN-A- 105 392 639

## Description

### Technical Field

The present invention relates to a stud pin to be installed into a tread portion of a pneumatic tire, a pneumatic tire in which the stud pin has been installed, a method for manufacturing a pneumatic tire, and a method for installing a stud pin.

### Background Art

Conventional snow tires provide grip on icy road surfaces via stud pins installed into the tread portions of pneumatic tires.
Typical stud pins are embedded in pin embedding holes (hereinafter also referred to simply as "holes") provided in the tread portion. When a stud pin is embedded in the hole, the diameter of the hole is spread and the stud pin is inserted. As such, the stud pin is firmly embedded in the hole. As a result, release of the stud pins from the holes due to breaking, accelerating, and lateral forces from the road surface during rolling motion of the pneumatic tire is prevented.

When a stud pin is released from a pneumatic tire, the stud pin releases while rotating relative to the hole. Therefore, in order to prevent the releasing of stud pins, it is preferable that the stud pins do not rotate relative to the hole. As such, there are many cases where the upper flange and the lower flange of the stud pin are provided with polygonal shapes.
For example, technology is known in which side surfaces of an upper flange and a lower flange, of a stud pin, that have polygonal shapes, are provided with curved recesses, and rotation of the stud pin is suppressed due to tread rubber pressing into the curved recesses (WO/2015/114813).

EP 2 933 121 A1 discloses a stud pin primarily including a tip end and a buried base. The buried base is embedded inside the stud pin installation hole in the treat portion of the pneumatic tire in which it is installed. The stud pin is secured to the tire due to the side surfaces of the stud pin installation hole pressing and clamping onto the buried base. The buried base includes a trunk portion, a bottom portion and a shank portion. The bottom portion is located at the end opposite the tip end. The bottom portion is a flange. A first recess is provided at the outer peripheral surface of the flanged bottom portion that is in contact with the stud pin installation hole. The cross-section of the bottom portion may be of a substantially triangular shape, wherein at least two sides of the substantially triangular shape should be recessed to create the first recesses.

CN 105 392 639 A respectively discloses a stud pin which mainly includes a buried base portion and the tip portion. The buried base portion of the stud pin includes a bottom portion, a shank portion and a body portion, which are formed in the stated order in the X-direction. A recessed portion is formed in the outer peripheral surface of the bottom portion that comes into contact with the side surface of the stud pin installation hole. The cross-section of the bottom portion may be substantially triangular. In this case, the recessed portion is preferably formed by at least one side of the substantially triangular shape being recessed.

### Summary of Invention

### Technical Problem

While pin release resistance is improved with the technology in which curved recesses are provided in the side surfaces of the upper flange and the lower flange of a stud pin, insertion of the stud pins is difficult. When installing stud pins in a pneumatic tire, the hole in the tread portion is spread while a stud pin is gripped by the gripping part of an insertion apparatus, and the stud pin is pressed into the spread hole. What is meant by insertion of the stud pins being difficult is that there are increasing cases where the stud pin cannot be pressed into the hole.

In light of this, an object of the present invention is to provide a stud pin that is easy to insert and has superior pin release resistance; a pneumatic tire installed with this stud pin; a method for manufacturing a pneumatic tire; and a method for installing a stud pin.

### Solution to Problem

One aspect of the present invention is a stud pin to be embedded into a pin embedding hole provided in a tread portion of a pneumatic tire.

The stud pin includes:
a tip having a tip end surface configured to contact a road surface; and
a trunk portion holding the tip and extending in one direction.

The trunk portion includes:
an upper flange fixing the tip at a first end of the trunk portion; and
a lower flange provided at a position of the trunk portion on a side opposite the upper flange; an edge defining a peripheral shape of the lower flange, when the lower flange is viewed in an extending direction of the trunk portion, having:
   a first side of a shape protruding roundly toward an outer side of the lower flange, protruding in a first direction orthogonal to the extending direction of the trunk portion, and
   a second side provided on an opposite side to the first side with respect to a tip disposal position where the tip is provided, the second side extending in a second direction orthogonal to the first direction and the extending direction, and being provided with a recess that is recessed toward an inner side of the lower flange.

When the lower flange is viewed from the first direction, both ends of the lower flange that are separated the farthest in the second direction from the tip disposal position are preferably closer to the second side in the first direction than to the first side from the tip disposal position.

The edge of the lower flange includes a pair of third sides extending in the first direction that connect the first side and the second side; wherein
a first distance between connection points that connect the third sides and the first side is preferably shorter than a second distance between connection points that connect the third sides and the second side.

The second distance is preferably not less than 1.05 times and not greater than 1.3 times the first distance.

Each of the third sides preferably includes a recess that is recessed toward the inner side of the lower flange.

Another aspect of the present invention is a pneumatic tire.
The pneumatic tire includes:
a tread portion provided with a stud pin embedding hole; and
a stud pin installed in the stud pin embedding hole.
The stud pin includes:
a tip having a tip end surface configured to contact a road surface; and
a trunk portion holding the tip and extending in one direction.
The trunk portion includes:
an upper flange fixing the tip at a first end of the trunk portion; and
a lower flange provided at a position of the trunk portion on a side opposite the upper flange, an edge defining a peripheral shape of the lower flange,
when the lower flange is viewed in an extending direction of the trunk portion, having:
   a first side of a shape protruding roundly toward an outer side of the lower flange, protruding in a first direction orthogonal to the extending direction of the trunk portion, and
   a second side provided on an opposite side to the first side with respect to a tip disposal position where the tip is provided, the second side extending in a second direction orthogonal to the first direction and the extending direction, and being provided with a recess that is recessed toward an inner side of the lower flange.
      The stud pin is installed in the stud pin embedding hole such that the first direction corresponds to a tire circumferential direction of the pneumatic tire.

Preferably, the pneumatic tire is provided with an information display member designating a rotational direction for advancing, and the stud pin is installed in the stud pin embedding hole such that the first direction corresponds to the rotational direction of the pneumatic tire.

Another aspect of the present invention is a method for manufacturing a pneumatic tire installed with a stud pin.
The stud pin used in the manufacturing method includes:
a tip having a tip end surface configured to contact a road surface; and
a trunk portion holding the tip and extending in one direction; and
   the trunk portion includes:
   an upper flange fixing the tip at a first end of the trunk portion; and
   a lower flange provided at a position of the trunk portion on a side opposite the upper flange,
   an edge defining a peripheral shape of the lower flange, when the lower flange is viewed in an extending direction of the trunk portion, having:
      a first side of a shape protruding roundly toward an outer side of the lower flange, protruding in a first direction orthogonal to the extending direction of the trunk portion, and
      a second side provided on a side, based on a tip disposal position where the tip is provided, opposite the first side, the second side extending in a second direction orthogonal to the first direction and the extending direction, and being provided with a recess that is recessed toward an inner side of the lower flange.
      The manufacturing method includes the steps of:
      fabricating a pneumatic tire including a tread portion in which a stud pin embedding hole is provided;
      installing the stud pin in the stud pin embedding hole by holding three positions on the edge of the lower flange of the stud pin by three holding members of a stud pin insertion apparatus and spreading the stud pin embedding hole using end portions of the three holding members, the holding members holding the lower flange at the first side and the second side.

Holding positions where the edge of the stud pin is held by the holding members preferably include two positions on the first side and one position on the recess of the second side.

The holding positions at the two positions on the first side preferably correspond to two peaks of an isosceles triangle, while the holding position on the second side corresponds to the other peak of the isosceles triangle.

The stud pin is preferably installed in the stud pin embedding hole such that the first direction corresponds to the tire circumferential direction of the pneumatic tire.

Preferably, the pneumatic tire is provided with an information display member designating a rotational direction, and the stud pin is installed in the stud pin embedding hole such that the first direction corresponds to the rotational direction of the pneumatic tire for advancing.

Another aspect of the present invention is a method for installing a stud pin in a pneumatic tire.
The stud pin used in the stud pin installation method includes:
a tip having a tip end surface configured to contact a road surface; and
a trunk portion holding the tip and extending in one direction; and
   the trunk portion includes:
   an upper flange fixing the tip at a first end of the trunk portion; and
   a lower flange provided at a position of the trunk portion on a side opposite the upper flange,
   an edge defining a peripheral shape of the lower flange, when the lower flange is viewed in an extending direction of the trunk portion, having:
      a first side of a shape protruding roundly toward an outer side of the lower flange, protruding in a first direction orthogonal to the extending direction of the trunk portion, and
      a second side provided on an opposite side to the first side with respect to a tip disposal position where the tip is provided, the second side extending in a second direction orthogonal to the first direction and the extending direction, and being provided with a recess that is recessed toward an inner side of the lower flange.
      The stud pin installation method includes the steps of:
      disposing a pneumatic tire including a tread portion in which a stud pin embedding hole is provided at a predetermined position of a stud pin insertion apparatus; and
      installing the stud pin in the stud pin embedding hole by holding three positions on the edge of the lower flange of the stud pin by three holding members of the stud pin insertion apparatus and spreading the stud pin embedding hole using end portions of the three holding members, the holding members holding the lower flange at the first side and the second side.

Holding positions where the edge of the stud pin is held by the holding members preferably include two positions on the first side and one position on the recess of the second side.

The holding positions at the two positions on the first side preferably correspond to two peaks of an isosceles triangle, while the holding position on the second side corresponds to the other peak of the isosceles triangle.

The stud pin is preferably installed in the stud pin embedding hole such that the first direction corresponds to the tire circumferential direction of the pneumatic tire.

Preferably, the pneumatic tire is provided with an information display member designating a rotational direction for advancing, and the stud pin is installed in the stud pin embedding hole such that the first direction corresponds to a rotational direction of the pneumatic tire.

### Advantageous Effects of Invention

According to the aspects of the stud pin, the pneumatic tire, the method for manufacturing a pneumatic tire, and the method for installing a stud pin described above, stud pins can be easily inserted and superior pin release resistance can be obtained.

### Brief Description of Drawings

FIG. 1 is a tire cross-sectional view illustrating an example of a cross-section of a tire of an embodiment.
FIG. 2 is an appearance perspective view of a tire of the embodiment.
FIG. 3 is a planar development diagram illustrating a portion of a tread pattern of an example of a studded tire of the embodiment, developed on a plane.
FIGS. 4A and 4B are drawings illustrating an example of a stud pin of the embodiment.
FIGS. 5A and 5B are drawings illustrating another example of a shape of an edge of a lower flange of the stud pin of the embodiment.
FIGS. 6A and 6B are drawings illustrating an example of a stud pin installation method of the embodiment.
FIGS. 7A to 7F are drawings illustrating examples of shapes of the edge of the lower flange of the stud pin of the embodiment.

### Description of Embodiment

### Overall Explanation of the Tire

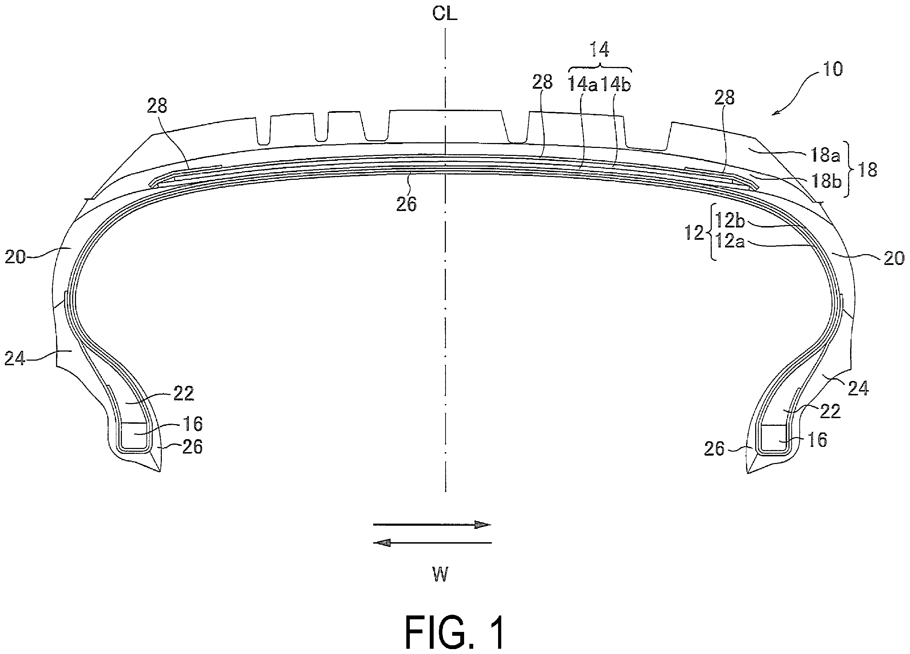

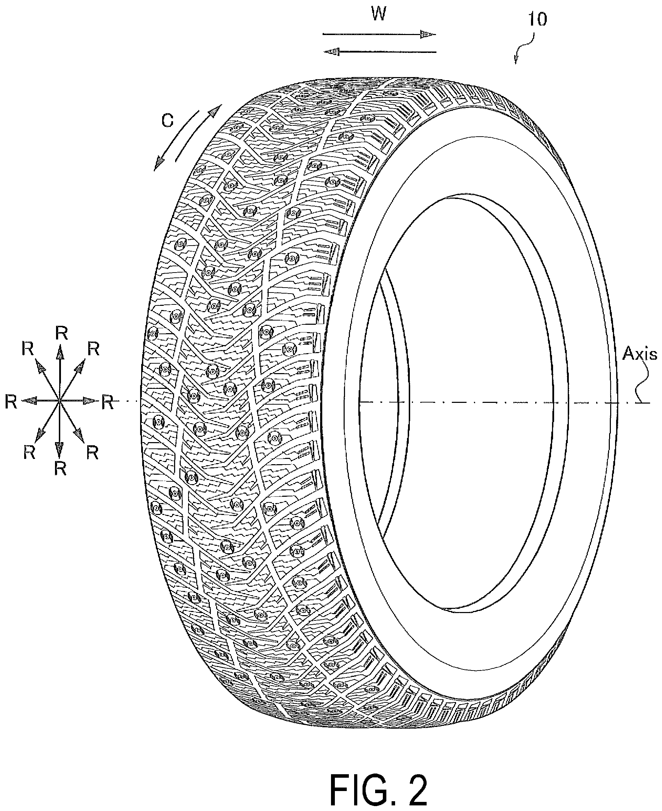

Below, a studded tire of the present embodiment is described. FIG. 1 is a tire cross-sectional view illustrating an example of a cross-section of a studded tire (hereinafter referred to as "tire") 10 of the present embodiment. FIG. 2 is an appearance perspective view of the tire 10.

The tire 10 is a tire with stud pins embedded in a tread portion (the stud pins are not illustrated in FIGS. 1 and 2).
The tire 10 is, for example, a tire for a passenger vehicle. A tire for a passenger vehicle refers to a tire defined according to Chapter A of the JATMA Yearbook 2012 (standards of The Japan Automobile Tyre Manufacturers Association, Inc.). The tire 10 can also be a small truck tire as defined in Chapter B or a truck tire or bus tire as defined in Chapter C.
Below, values of the dimensions of various pattern elements are described in detail as an example values for a tire for a passenger vehicle. However, the studded tire of the present invention is not limited to these example values.

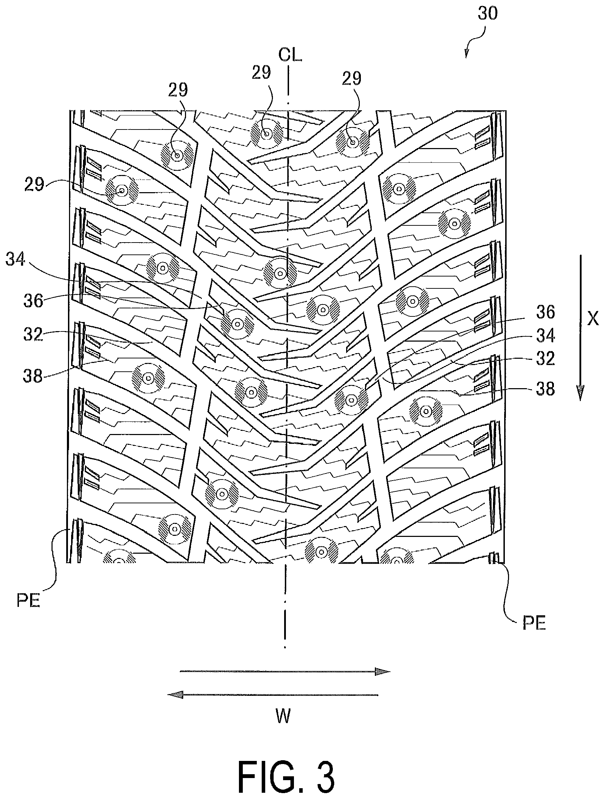

A tire circumferential direction C in the following description is defined as a direction the tread surface rotates (both rotational directions) when the tire 10 is rotated around a tire rotational axis (see FIG. 2); a tire radial direction R is defined as a radiation direction extending orthogonal to the tire rotational axis; and an outer side in the tire radial direction is defined as a side departing from the tire rotational axis in the tire radial direction R. A tire width direction W is defined as a direction parallel to the tire rotational axis; and an outer side in the tire width direction is defined as both sides departing from a tire equator line CL of the tire 10 (see FIG. 3).

### Tire Structure

The tire 10 includes a carcass ply layer 12, a belt layer 14, and bead cores 16 as skeleton members. The tire 10 mainly includes a tread rubber 18, a sidewall rubber 20, a bead filler rubber 22, a rim cushion rubber 24, and an inner liner rubber 26, around these skeleton members.

The carcass ply layer 12 includes carcass ply members 12a and 12b that are formed from organic fibers covered with rubber and that are wound between a pair of bead cores 16 of an annular shape so as to be formed into a toroidal shape. In the tire 10 illustrated in FIG. 1, the carcass ply layer 12 is made of the carcass ply members 12a and 12b, but may also be made of a single carcass ply member. The belt layer 14 is provided on the outer side in the tire radial direction of the carcass ply layer 12, and is made of two belt members 14a and 14b. The belt layer 14 is a member where rubber covers steel cords arranged inclined at a predetermined angle, for example, 20 to 30 degrees, with respect to the tire circumferential direction C, and a width in the tire width direction of the belt member 14a that is a lower layer is greater than a width of the belt member 14b that is the upper layer. The steel cords of the two layers of the belt members 14a and 14b are inclined from the tire circumferential direction C toward the tire width direction W in mutually different directions. As such, the belt members 14a and 14b are crossing layers serving to suppress expansion of the carcass ply layer 12 due to the pressure of air with which the tire 10 has been filled.

The tread rubber 18 is provided on the outer side of the belt layer 14 in the tire radial direction. The tread rubber 18 has both end portions thereof connected with the side rubber 20, to thereby form sidewall portions. The tread rubber 18 is made of two layers of rubber, namely an upper layer tread rubber 18a provided on the outer side in the tire radial direction and a lower layer tread rubber 18b provided on the inner side in the tire radial direction. The rim cushion rubber 24 is provided at the end of the side rubber 20 on the inner side in the tire radial direction, and comes into contact with a rim on which the tire 10 is mounted. The bead filler rubber 22 is provided on the outer side of the bead core 16 in the tire radial direction so as to be interposed between a portion of the carcass ply layer 12 prior to being wound around the bead core 16 and a portion of the carcass ply layer 12 after being wound around the bead core 16. The inner liner rubber 26 is provided on an inner surface of the tire 10 facing a tire cavity region that is filled with air and is surrounded by the tire 10 and the rim. In addition, the tire 10 includes a belt cover layer 28 formed from organic fiber covered with rubber that covers the belt layer 14 from the outer side in the tire radial direction of the belt layer 14.

The tire 10 has such a tire structure, but the tire structure of the present embodiment is not limited to the tire structure illustrated in FIG. 1.

### Tread Pattern

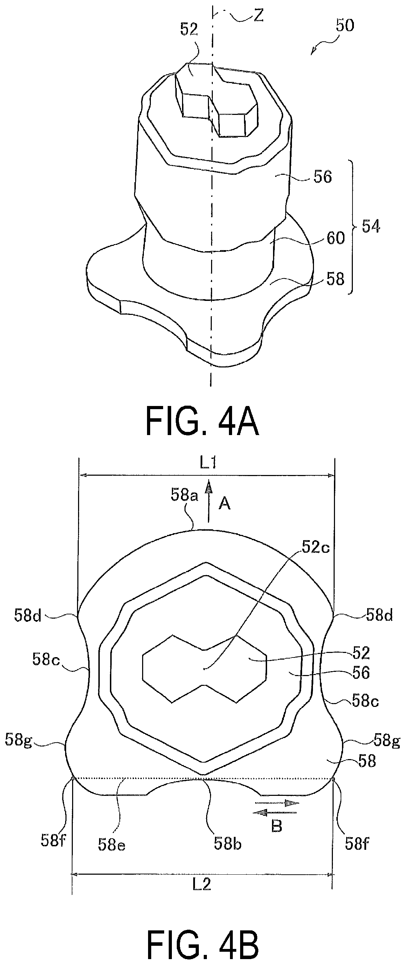

FIG. 3 is a planar development diagram illustrating a portion of an example of the tread pattern, namely a tread pattern 30, of the tire 10 developed on a plane. In FIG. 3, stud pins installed into the tread portion are omitted from the illustration. As illustrated in FIG. 3, the tire 10 has a first orientation in the tire circumferential direction C designated by rotational direction X. Information of the orientation of the rotational direction X is shown by an information display member including numbers, symbols, and the like (e.g. an arrow symbol) on the sidewall surface of the tire 10. The stud pins (see FIG. 4A) are installed in a plurality of pin embedding holes (stud pin installation holes) 29 illustrated in FIG. 3.

The tread pattern 30 includes an inclined groove 32, a circumferential direction communicating grove 34, a protruding groove 36, and a sipe 38. The inclined groove 32 is formed in plurality at a predetermined pitch in the tire circumferential direction (the vertical direction in FIG. 3).
The inclined groove 32 extends in a direction opposite (the up direction in FIG. 3) the tire rotational direction X (the down direction in FIG. 3) and outward in the tire width direction. The inclined groove 32 has a starting edge at a position near the tire equator line CL on one side in the tire width direction W across the tire equator line CL, crosses the tire equator line CL and advances toward the other side in the tire width direction W, and ends at a pattern end PE.
A groove width of the inclined groove 32 gradually increases from the starting edge near the tire equator line CL. The inclination with respect to the tire width direction W of the inclined groove 32 is smallest near the tire equator line CL including the starting edge and, after crossing the tire equator line CL, bends so that the angle of inclination with respect to the tire width direction W increases, and advances outward in the tire width direction in a direction opposite the tire rotational direction X. Furthermore, the inclination angle gradually decreases with advancement outward in the tire width direction. The inclined groove 32 configured as described above is provided on both sides across the tire equator line CL.
The inclined groove 32 provided on one side across the tire equator line CL of the tread portion is offset in the tire circumferential direction C with respect to the inclined groove 32 provided on the other side; and the starting edge of the inclined groove 32 provided on one side are configured so as not to connect with the inclined groove 32 provided on the other side.

Of the plurality of inclined grooves 32 provided in the tire circumferential direction C, the inclined grooves 32 that are adjacent are in communication via the circumferential direction communicating groove 34. More specifically, the circumferential direction communicating groove 34 extends in the tire circumferential direction C from a position partway along one of the inclined groove 32, crosses a second inclined groove 32 that is adjacent to the one inclined groove 32 in the tire circumferential direction C, and advances to a third inclined groove 32 that is adjacent to the second inclined groove 32. That is, the starting edge of the circumferential direction communicating groove 34 is located at one of the inclined grooves 32; and a terminating edge is located at the second inclined groove 32 along the tire circumferential direction C from the inclined groove 32 containing the starting edge. As described above, the circumferential direction communicating groove 34 is provided so as to connect three of the inclined grooves 32 that are adjacent along the tire circumferential direction C. The circumferential direction communicating groove 34 are inclined with respect to the tire circumferential direction C so as to approach the tire equator line CL with advancement in the direction opposite to the tire rotational direction X.

The protruding groove 36 protrudes in a direction toward the tire equator line CL from the circumferential direction communicating groove 34, and is provided so as to terminate prior to reaching the tire equator line CL.

A land portion of the tread portion are separated into a center region and shoulder regions by the inclined grooves 32 and the circumferential direction communicating grooves 34. A plurality of the sipes 38 connected to the inclined grooves 32 and the circumferential direction communicating grooves 34 is provided in the center region and both of the shoulder regions of the tread portion.

Furthermore, the plurality of the pin embedding holes 29 is provided in the center region and both of the shoulder regions of the tread portion.
A groove depth of the inclined groove 32, the circumferential direction communicating groove 34, and the protruding groove 36 is, for example, from 8.5 to 10.5 mm, and a maximum groove width is 12 mm. The tread pattern illustrated in FIG. 3 is an example, and the tread pattern of the tire in which the stud pin has been installed of the present embodiment is not limited thereto.

### Stud Pin

FIG. 4A is a perspective view illustrating an example of a stud pin 50 of the present embodiment. FIG. 4B is a plan view of the stud pin 50, and is a drawing illustrating a lower flange of the stud pin 50 when viewed from an extending direction of a trunk portion.

The stud pin 50 includes a tip 52 and a trunk portion 54. The trunk portion 54 includes an upper flange 56, a lower flange 58, and a shank portion 60. When installed in the pin embedding holes 29 of the tire 10, the trunk portion 54 is installed in the tread rubber 18 (FIG. 1) and is in contact with the tread rubber 18.

The tip 52 has a tip end surface that contacts a road surface. The tip 52 is formed from tungsten carbide or a similar cemented carbide. Additionally, the tip 52 may be formed from a cermet material. The tip 52 is fixed in a hole provided in the upper end surface of the trunk portion 54. The tip 52 of the stud pin 50 is configured so as to protrude from the tread surface when the stud pin 50 is installed in the tire 10.

The trunk portion 54 holds the tip 52 and is provided around a central axis Z.
The upper flange 56 of the trunk portion 54 is configured so that, when embedded in the tread portion of the tire 10, the tip 52 protrudes from the tread surface. The tip 52 is fixed to a first end of the trunk portion 54, namely an end of the upper flange 56.
The lower flange 58 is configured so as to be in contact with a bottom of the pin embedding hole 29, when embedded in the tread portion of the tire 10. The lower flange 58 is provided at a position on a side opposite the first end of the trunk portion 54.
The shank portion 60 is a portion that connects the upper flange 56 with the lower flange 58. A cross-section of the shank portion 60 orthogonal to the central axis Z is narrower than each of a cross-section of the upper flange 56 and a cross-section of the lower flange 58.
Material of the trunk portion 54 is not particularly limited and, for example, the trunk portion 54 may be formed from aluminum alloy or the like in order to reduce the weight of the stud pin 50.
The central axis Z passes through the centroid of a cross-section orthogonal to the extending direction along which the trunk portion 54 extends. Accordingly, an axial direction of the central axis Z is the extending direction of the trunk portion 54.

Here, the upper flange 56 and the lower flange 58 of the trunk portion 54 include side surfaces extending in parallel in the axial direction of the central axis Z of the stud pin 50.
When the upper flange 56 is viewed from the extending direction of the trunk portion 54, an edge defining a peripheral shape of the upper flange 56 forms a deformed hexagonal shape in which the six points are rounded and a portion of four of the sides is recessed. This shape is only an example and, as illustrated in FIG. 4B, the shape of the upper flange 56 is not particularly limited provided that the lower flange 58 is larger than the upper flange 56 when the trunk portion 54 is viewed from the extending direction of the trunk portion 54, and may be any other known shape.

Regarding the lower flange 58, when the lower flange 58 is viewed from the extending direction of the trunk portion 54 (the axial direction of the central axis Z), as illustrated in FIG. 4B, an edge defining a peripheral shape of the lower flange 58 includes a first side 58a and a second side 58b.
The first side 58a has a shape roundly protruding toward an outer side of the lower flange 58, and protrudes in a first direction A orthogonal to the extending direction of the trunk portion 54 (the axial direction of the central axis Z).
As illustrated in FIG. 4B, the second side 58b is provided on an opposite side to the first side 58a with respect to the tip disposal position where the tip 52 is provided and specifically on a center position 52c of the tip 52 (or the position of the central axis Z). The second side 58b extends in a second direction B orthogonal to the first direction A and the extending direction of the trunk portion 54, and includes a recess that is recessed toward an inner side of the lower flange 58.

In the edge defining the peripheral shape of the lower flange 58, a pair of third sides 58c are provided that connect the first side 58a and the second side 58b. Each of the third sides 58c extends in the first direction A. As illustrated in FIG. 4B, in cases where recesses are provided in the third sides 58c, the first side 58a is formed with points 58d, where each of the third sides 58c and the recesses begin, as edges.
Additionally, a pair of points 58f, where the edge of the lower flange 58 meets a straight line 58e, is formed as the edges of the second side 58b. The straight line 58e is parallel to the second direction B and passes through a position where the recess provided in the second side 58b is most recessed. Accordingly, in the example illustrated in FIG. 4B, the third sides 58c are portions of straight lines or curved lines between each of the points 58f and each of the points 58d.

As illustrated in FIG. 4B, in a drawing of the lower flange 58, a viewing angle of the first side 58a as seen from the center position 52c of the tip 52 is preferably 60 degrees or greater and more preferably not less than 80 degrees and not greater than 120 degrees.

The rounded shape of the first side 58a is preferably an arc shape of a perfect circle or an oval having the center position 52c as a center as damage to the walls of the pin embedding holes (the stud pin installation holes) 29 will be suppressed, but other curved shapes are also allowable.
The second side 58b may be of a shape including two straight lines and a recessed portion positioned between the two straight lines, or the shape of the portions on either side of the recess may be a curved shape forming a shape that protrudes toward the outer side of the lower flange 58, instead of being a straight line shape. Additionally, the recess of the second side 58b may be formed as a curving recessed shape, or may be formed as a recessed shape in which two straight lines are combined to form a V shape. The recesses of the third sides 58c may be formed as curving recessed shapes, or may be formed as recessed shapes in which two straight lines are combined to form a V shape.

In the stud pin 50 of the present embodiment, when the lower flange 58 is viewed from the first direction A, both ends 58g of the lower flange 58 that are separated the farthest in the second direction B from the tip disposal position (the center position 52c) are preferably closer to the second side 58b, in the first direction A, than to the first side 58a from the tip disposal position (the center position 52c). Particularly, a distance L1 between connection points that connect the third sides 58c and the first side 58a (distance between the points 58d) is preferably shorter than a distance L2 between connection points that connect the third sides 58c and the second side 58b (distance between the points 58f). That is, the second side 58b is disposed on a back side in the rotational direction X because the length in the second direction B of the second side 58b is relatively greater than the first side 58a. As a result, pin release resistance of the tire during braking can be improved.
In this case, the distance L2 is preferably not less than 1.05 times and not greater than 1.3 times the distance L1.

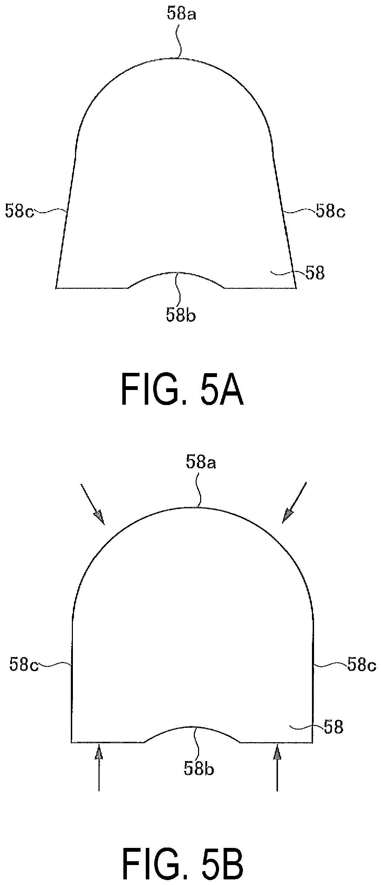

FIGS. 5A and 5B are drawings illustrating another example of the shape of the edge of the lower flange 58. As illustrated in FIGS. 5A and 5B, the third sides 58c that connect the first side 58a and the second side 58b may have a straight line shape. However, each of the third sides 58c preferably includes the recess that is recessed toward the inner side of the lower flange 58, as illustrated in FIG. 4B. In this case, the tread rubber will press into the recess and, as a result, rotation of the stud pin 50 can be suppressed and pin release resistance can be improved.

Additionally, a length along the second direction B of the recess of the second side 58b is preferably from 30 to 70% of the distance L2. Additionally, a depth of the recess of the second side 58b (length along the first direction A between the starting point of the recess and the most recessed point of the recess) is preferably from 5 to 20% of the distance L2.
Additionally, a length along the first direction A of the recesses of the third sides 58c is preferably from 60 to 90% of a length along the first direction A between each of the points 58d and each of the points 58f. Additionally, a depth of the recesses of the third sides 58c (length along the second direction B between the starting point of the recesses and the most recessed point of the recesses) is preferably from 5 to 20% of the length along the first direction A between each of the points 58d and each of the points 58f.

The stud pin 50 described above is preferably installed in the pin embedding hole 29 such that the first direction A corresponds to the tire circumferential direction C of the pneumatic tire 10. More specifically, preferably, the pneumatic tire 10 is provided with an information display member (information display member displaying an arrow symbol or the like indicating the rotational direction X) designating the rotational direction for advancing, and the stud pin 50 is installed in the pin embedding hole (the stud pin installation hole) 29 such that the first direction A corresponds to the designated rotational direction X of the pneumatic tire 10. Here, the stud pin 50 is prone to being released from the tread portion during braking. At such a time, due to breaking forces applied to the stud pin 50 from the road surface, a force is generated that causes the second side 58b to lift up from the bottom of the pin embedding hole 29. However, because the second side 58b, which has a greater side length because it includes the recess, is positioned on the back side in the rotational direction X, the lifting up of the second side 58b from the bottom of the pin embedding hole 29 can be suppressed. As a result, pin release resistance is improved. Additionally, due to breaking forces applied to the stud pin 50 from the road surface, the first side 58a is prone to bite into the wall of the pin embedding hole 29 and damage the wall. However, because the shape of the first side 58a is rounded, damaging of the wall of the pin embedding hole 29 by the first side 58a can be suppressed.

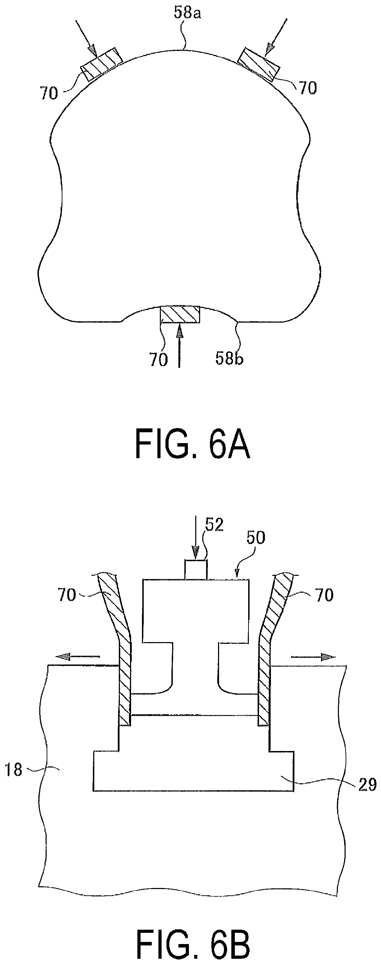

In a method for manufacturing the pneumatic tire 10 in which the stud pin has been installed described above, first, a pneumatic tire including a tread portion in which the pin embedding holes 29 are provided is fabricated. The pin embedding holes 29 are formed by a die used in the vulcanization process of the tire.
A stud pin insertion apparatus is used to install the stud pin 50 in the tire 10. FIGS. 6A and 6B are drawings illustrating an example of a stud pin installation method of the present embodiment.
As illustrated in FIG. 6A, three positions on the edge of the lower flange 58 of the stud pin 50 are held by three holding members 70 of the stud pin insertion apparatus and the pin embedding hole (stud pin installation hole) 29 is spread using end portions of the three holding members 70. Other than the three positions on the edge of the lower flange 58, the holding members 70 are not in contact with the stud pin 50. As such, the size of the pin embedding hole 29 will be enlarged just enough to allow the stud pin 50 to be inserted. Thereafter, a pusher rod pushes on the stud pin 50 from the side of the tip 52, and presses the stud pin 50 toward the bottom of the pin embedding hole 29, vertically from up to down in FIG. 6B. Thus, the stud pin 50 is installed in the pin embedding hole 29. Here, the edge of the lower flange 58 that is held by the holding members 70 is, as illustrated in FIG. 6A, the first side 58a and the second side 58b. As described above, the pin embedding hole 29 is spread while the three positions on the first side 58a and the second side 58b are held by the three holding members 70. Thus, compared to a conventional case in which the pin embedding hole 29 is spread at four positions thereof using holding members, cracking will not easily occur in the pin embedding hole 29 and pin release resistance is improved. Additionally, because the edge is held at the rounded first side 58a, even if the holding position of the holding members 70 becomes displaced, the stud pin 50 can be held without the central axis Z thereof tilting (wavering). Therefore, stud pin insertion failures can be reduced.

Here, as illustrated in FIG. 6A, the holding positions at which the edge of the lower flange 58 is held by the holding members 70 preferably include two positions on the first side 58a and one position on the recess of the second side 58b. Due to the edge being held at the holding positions at two positions on the first side 58a and the holding position at one position on the recess of the second side 58b, the lower flange 58 can be held even more securely without the central axis Z of the stud pin 50 tilting (wavering). Therefore, stud pin insertion failures can be reduced.
Here, the holding positions at the two positions on the first side 58a preferably correspond to two peaks of an isosceles triangle, while the holding position on the second side 58b corresponds to the other peak of the isosceles triangle.

Additionally, the stud pin 50 is preferably installed in the pin insertion hole (stud pin installation hole) 29 such that the first direction A corresponds to the tire circumferential direction C of the pneumatic tire 10. Additionally, the stud pin 50 is preferably installed in the pin embedding hole 29 such that the first direction A corresponds to the rotational direction X for advancing the pneumatic tire 10.

As described above, in the method for manufacturing the pneumatic tire and the method for installing the stud pin, the stud pin 50 of the present embodiment is used and, as a result, a method can be realized where installation failures of the stud pin 50 are few.

Working Examples and Conventional Examples
Various stud pins having lower flanges of differing shapes were fabricated. The fabricated stud pins were embedded in the tire 10 illustrated in FIGS. 1 to 3, and these studded tires were mounted on a passenger vehicle. Then, pin release resistance was investigated.
The size of each fabricated tire was 205/55R16. The passenger vehicle used was a front-wheel drive sedan with an engine displacement of 2000 cc. The internal pressure condition of the tires was 230 (kPa) for both the front wheels and rear wheels. The load condition of the tires was a 450 kg load on the front wheels and a 300 kg load on the rear wheels.

Stud pin insertion stability was determined by calculating the probability of insertion success when inserting stud pins into 10 tires using an existing stud pin insertion apparatus. The probabilities of the Working Examples and the like were indexed with, of the probabilities, the probability of Conventional Example being set as a standard (index value of 100). Accordingly, higher index values indicate higher stud pin insertion stability.

Pin release occurs only rarely on icy road surfaces and occurs readily on dry road surfaces including asphalt road surfaces and concrete road surfaces. Accordingly, in the pin release resistance tests, the proportion of the number of stud pins remaining in the tread rubber to the total number of installed stud pins was obtained after the passenger vehicle described above traveled 10,000 km on a dry road surface. The proportion of remaining stud pins was indexed with the proportion of remaining stud pins in Comparative Example 1 being set as a standard (index value of 100). Accordingly, higher index values indicate better pin release resistance.

Specifications of the fabricated stud pins and evaluation results for the same are shown in Table 1 below.

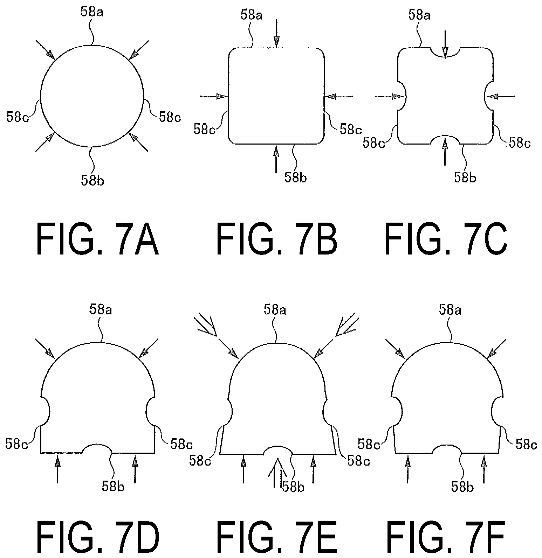

FIGS. 7A to 7F are drawings illustrating examples of shapes of the edge of the lower flange 58. The arrows illustrated in FIGS. 7A to 7F represent the holding positions where the holding members 70 hold the stud pin. In each of Working Examples 1 to 5, the stud pins were installed such that the first direction A corresponded to the rotational direction X of the tire.
In Conventional Examples 2 and 3 and Working Examples 1 and 2, L1 and L2 were both 6 mm, and in Working Examples 3 and 4, L1 was 5 mm and L2 was 7 mm. In Working Example 5, L1 was 7 mm and L2 was 5 mm. In the insertion stability testing, insertion failures at an index value of 98 were low to the point of being substantially indistinguishable from an index value of 100.

**[Table 1-1]**

| | Conventional Example 1 | Conventional Example 2 | Conventional Example 3 |
|---|---|---|---|
| Edge shape of lower flange | FIG. 7A | FIG. 7B | FIG. 7C |
| Shape of first side | Circular | Straight line, no recess | Straight line, recess |
| Shape of second side | Circular | Straight line, no recess | Straight line, recess |
| Distance L1, Distance L2 | - | L1=L2 | L1=L2 |
| Shape of third side | Circular | Straight line, no recess | Straight line, recess |
| Number of holding positions | 4 (→ symbols shown in FIG. 7A) | 4 (→ symbols shown in FIG. 7B) | 4 (→ symbols shown in FIG. 7C) |
| Pin release resistance | 100 | 102 | 103 |
| Insertion stability | 100 | 96 | 96 |

**[Table 1-2]**

| | Working Example 1 | Working Example 2 | Working Example 3 | Working Example 4 | Working Example 5 |
|---|---|---|---|---|---|
| Edge shape of lower flange | FIG. 5B | FIG. 7D | FIG. 7E | FIG. 7E | FIG. 7F |
| Shape of first side | Circular | Circular | Circular | Circular | Circular |
| Shape of second side | Straight line, recess | Straight line, recess | Straight line, recess | Straight line, recess | Straight line, recess |
| Distance L1, Distance L2 | L1=L2 | L1=L2 | L1<L2 | L1<L2 | L1>L2 |
| Shape of third sid e | Straight line, no recess | Straight line, recess | Straight line, recess | Straight line, V recess | Straight line, recess |
| Number of holding positions | 4 (→ symbols shown in FIG. 5B) | 4 (→ symbols shown in FIG. 7D) | 4 (→ symbols shown in FIG. 7E) | 3 (⇒ symbols shown in FIG. 7E) | 4 (→ symbols shown in FIG. 7F) |
| Pin release resistance | 105 | 107 | 110 | 110 | 103 |
| Insertion stability | 98 | 98 | 98 | 100 | 98 |

It is clear from Table 1 that Working Examples 1 to 5 have superior pin release resistance compared to Conventional Examples 1 to 3, while realizing the same superior insertion stability displayed by Conventional Example 1.
By comparing Working Examples 3 and 4, it becomes clear that superior insertion stability can be obtained by changing the number of holding positions of the stud pin from 4 to 3. By comparing Working Examples 1 and 2, it becomes clear that pin release resistance is improved by providing the recesses in the third sides. By comparing Working Examples 2, 3, and 5, it becomes clear that pin release resistance is improved by configuring the distance L2 to be greater than the distance L1.

The stud pin, the pneumatic tire, the method for manufacturing the pneumatic tire, and the method for installing the stud pin of the present invention have been described in detail above. However, no limitation of the present invention to the above-described embodiment and working examples is intended. Various improvements and variations are of course applicable within the scope of the present invention.

### Reference Signs List

10 Pneumatic tire
12 Carcass ply layer
14 Belt layer
14a, 14b Belt members
16 Bead core
18 Tread rubber
18a Upper layer tread rubber
18b Lower layer tread rubber
20 Side rubber
22 Bead filler rubber
24 Rim cushion rubber
26 Inner liner rubber
28 Belt cover layer
29 Pin embedding hole
30 Tread pattern
32 Inclined groove
34 Circumferential direction communicating groove
36 Protruding groove
50 Stud pin
52 Tip
52c Center position
54 Trunk portion
56 Upper flange
58 Lower flange
58a First side
58b Second side
58c Third side
58d, 58f Point
58e Straight line
58g Both ends
60 Shank portion

## Claims

1. A stud pin (50) to be embedded in a pin embedding hole (29) provided in a tread portion of a pneumatic tire (10), the stud pin (50) comprising:
a tip (52) having a tip end surface configured to contact a road surface; and
a trunk portion (54) holding the tip (52) and extending in one direction;
the trunk portion (54) including:
an upper flange (56) fixing the tip (52) at a first end of the trunk portion (54); and
a lower flange (58) provided at a position of the trunk portion (54) on a side opposite the upper flange (56);
an edge defining a peripheral shape of the lower flange (58), when the lower flange (58) is viewed in an extending direction of the trunk portion (54), having:
a first side (58a) of a shape protruding roundly toward an outer side of the lower flange (58), protruding in a first direction A orthogonal to the extending direction of the trunk portion (54), and
a second side (58b) provided on an opposite side to the first side (58a) with respect to a tip disposal position where the tip (52) is provided, the second side (58b) extending in a second direction B orthogonal to the first direction A and the extending direction, and being provided with a recess that is recessed toward an inner side of the lower flange (58);
wherein the edge of the lower flange (58) includes a pair of third sides (58c) extending in the first direction that connect the first side (58a) and the second side (58b); and
a first distance L1 between connection points that connect the third sides (58c) and the first side (58a) is shorter than a second distance L2 between connection points that connect the third sides (58c) and the second side (58b), **characterized in that** the second distance L2 is not less than 1.05 times and not greater than 1.3 times the first distance L1.

2. The stud pin (50) according to claim 1 wherein,
when the lower flange (58) is viewed from the first direction A, both ends (58g) of the lower flange (58) that are separated the farthest in the second direction B from the tip disposal position are closer to the second side (58b) in the first direction A than to the first side (58a) from the tip disposal position.

3. The stud pin (50) according to claim 1, wherein
each of the third sides (58c) includes a recess that is recessed toward the inner side of the lower flange (58).

4. A pneumatic tire (10) comprising:
a tread portion provided with a stud pin embedding hole (29); and
a stud pin (50) installed in the stud pin embedding hole (29); the stud pin (50) including:
a tip (52) having a tip end surface configured to contact a road surface; and
a trunk portion (54) holding the tip (52) and extending in one direction; and
the trunk portion (54) including:
an upper flange (56) fixing the tip (52) at a first end of the trunk portion (54); and
a lower flange (58) provided at a position of the trunk portion (54) on a side opposite the upper flange (56), an edge defining a peripheral shape of the lower flange (58), when the lower flange (58) is viewed in an extending direction of the trunk portion (54), having:
a first side (58a) of a shape protruding roundly toward an outer side of the lower flange (58), protruding in a first direction A orthogonal to the extending direction of the trunk portion (54), and
a second side (58b) provided on an opposite side to the first side (58a) with respect to a tip disposal position where the tip (52) is provided, the second side (58b) extending in a second direction B orthogonal to the first direction A and the extending direction, and being provided with a recess that is recessed toward an inner side of the lower flange (58); and **characterized in that**
the stud pin (50) being installed in the stud pin embedding hole (29) such that the first direction corresponds to a tire circumferential direction C of the pneumatic tire (10).

5. The pneumatic tire (10) according to claim 4, wherein:
the pneumatic tire (10) is provided with an information display member designating a rotational direction X for advancing, and the stud pin (50) is installed in the stud pin embedding hole (29) such that the first direction corresponds to the rotational direction X of the pneumatic tire (10).

6. A method for manufacturing a pneumatic tire (10) studded with a stud pin (50),
the stud pin (50) including:
a tip (52) having a tip end surface configured to contact a road surface; and
a trunk portion (54) holding the tip (52) and extending in one direction; and
the trunk portion (54) including:
an upper flange (56) fixing the tip (52) at a first end of the trunk portion (54); and
a lower flange (58) provided at a position of the trunk portion on a side opposite the upper flange (56),
an edge defining a peripheral shape of the lower flange (58), when the lower flange (58) is viewed in an extending direction of the trunk portion (54), having:
a first side (58a) of a shape protruding roundly toward an outer side of the lower flange (58), protruding in a first direction A orthogonal to the extending direction of the trunk portion (54), and
a second side (58b) provided on a side, based on a tip disposal position where the tip (52) is provided, opposite the first side (58a), the second side (58b) extending in a second direction B orthogonal to the first direction A and the extending direction, and being provided with a recess that is recessed toward an inner side of the lower flange (58); and
the method comprising the steps of:
fabricating a pneumatic tire (10) including a tread portion in which a stud pin embedding hole (29) is provided; **characterized in that**
installing the stud pin (50) in the stud pin embedding hole (29) by holding three positions on the edge of the lower flange (58) of the stud pin (50) by three holding members (70) of a stud pin insertion apparatus and spreading the stud pin embedding hole (29) using end portions of the three holding members (70), the holding members (70) holding the lower flange (58) at the first side (58a) and the second side (58b).

7. The method for manufacturing a pneumatic tire (10) according to claim 6, wherein
holding positions where the edge of the stud pin (50) is held by the holding members (70) include two positions on the first side (58a) and one position on the recess of the second side (58b).

8. The method for manufacturing a pneumatic tire (10) according to claim 7, wherein
the holding positions at the two positions on the first side (58a) correspond to two peaks of an isosceles triangle, while the holding position on the second side (58b) corresponds to the other peak of the isosceles triangle.

9. The method for manufacturing a pneumatic tire (10) according to any one of claims 6 to 8, wherein
the stud pin (50) is installed in the stud pin embedding hole (29) such that the first direction A corresponds to a tire circumferential direction C of the pneumatic tire (10).

10. The method for manufacturing a pneumatic tire (10) according to any one of claims 6 to 8, wherein:
the pneumatic tire (10) is provided with an information display member designating a rotational direction X, and
the stud pin (50) is installed in the stud pin embedding hole (29) such that the first direction A corresponds to the rotational direction X of the pneumatic tire (10) for advancing.

11. A method for installing a stud pin (50) in a pneumatic tire (10), the stud pin (50) including:
a tip (52) having a tip end surface configured to contact a road surface; and
a trunk portion (54) holding the tip (52) and extending in one direction;
the trunk portion (54) including:
an upper flange (56) fixing the tip (52) at a first end of the trunk portion (54); and
a lower flange (58) provided at a position of the trunk portion (54) on a side opposite the upper flange (56),
an edge defining a peripheral shape of the lower flange (58), when the lower flange (58) is viewed in an extending direction of the trunk portion (54), having:
a first side (58a) of a shape protruding roundly toward an outer side of the lower flange (58), protruding in a first direction A orthogonal to the extending direction of the trunk portion (54), and
a second side (58b) provided on an opposite side to the first side (58a) with respect to a tip disposal position where the tip (52) is provided, the second side (58b) extending in a second direction B orthogonal to the first direction and the extending direction, and being provided with a recess that is recessed toward an inner side of the lower flange (58); and the method comprising the steps of:
disposing a pneumatic tire (10) including a tread portion in which a stud pin embedding hole (29) is provided at a predetermined position of a stud pin insertion apparatus; and **characterized in that**
installing the stud pin (50) in the stud pin embedding hole (29) by holding three positions on the edge of the lower flange (58) of the stud pin (50) by three holding members (70) of the stud pin insertion apparatus and spreading the stud pin embedding hole (29) using end portions of the three holding members (70), the holding members (70) holding the lower flange (58) at the first side (58a) and the second side (58b).

12. The method for installing a stud pin (50) according to claim 11, wherein holding positions where the edge of the stud pin (50) is held by the holding members include two positions on the first side (58a) and one position on the recess of the second side (58b).

13. The method for installing a stud pin (50) according to claim 12, wherein the holding positions at the two positions on the first side (58a) correspond to two peaks of an isosceles triangle, while the holding position on the second side (58b) corresponds to the other peak of the isosceles triangle.

14. The method for installing a stud pin (50) according to any one of claims 11 to 13, wherein
the stud pin (50) is installed in the stud pin embedding hole (29) such that the first direction corresponds to a tire circumferential direction C of the pneumatic tire (10).

15. The method for installing a stud pin (50) according to any one of claims 11 to 14, wherein:
the pneumatic tire (10) is provided with an information display member designating a rotational direction X for advancing, and
the stud pin (50) is installed in the stud pin embedding hole (29) such that the first direction A corresponds to the rotational direction X of the pneumatic tire (10).

## Patentansprüche

1. Spikestift (50), der in ein Stiftaufnahmeloch (29) in einem Laufflächenabschnitt eines Luftreifens (10) eingebracht werden soll, der Spikestift (50) umfassend:
eine Spitze (52) mit einer Spitzenendoberfläche, die so konfiguriert ist, dass sie mit einer Fahrbahnoberfläche in Kontakt steht; und
einen Rumpfabschnitt (54), der die Spitze (52) hält und sich in einer Richtung erstreckt;
der Rumpfabschnitt (54) einschließend:
einen oberen Flansch (56), der die Spitze (52) an einem ersten Ende des Rumpfabschnitts (54) fixiert; und
einen unteren Flansch (58), der an einer Position des Rumpfabschnitts (54) auf einer Seite gegenüber dem oberen Flansch (56) bereitgestellt ist;
einen Rand, der eine Umfangsform des unteren Flansches (58) definiert, wenn der untere Flansch (58) in einer Verlaufsrichtung des Rumpfabschnitts (54) betrachtet wird, aufweisend:
eine erste Seite (58a) einer Form, die zu einer Außenseite des unteren Flansches (58) hin vorstehend abgerundet ist und in einer ersten Richtung A senkrecht zu der Verlaufsrichtung des Rumpfabschnitts (54) vorsteht, und
eine zweite Seite (58b) auf einer gegenüberliegenden Seite zu der ersten Seite (58a) unter Bezugnahme auf eine Spitzenanordnungsposition, in der die Spitze (52) bereitgestellt ist, wobei sich die zweite Seite (58b) in einer zweiten Richtung B senkrecht zu der ersten Richtung A und der Verlaufsrichtung erstreckt und mit einer Vertiefung bereitgestellt ist, die zu einer Innenseite des unteren Flansches (58) hin vertieft ist;
wobei der Rand des unteren Flansches (58) ein Paar dritter Seiten (58c) einschließt, die sich in der ersten Richtung erstrecken und die die erste Seite (58a) und die zweite Seite (58b) verbinden; und einen ersten Abstand L1 zwischen Verbindungspunkten, die die dritten Seiten (58c) und die erste Seite (58a) verbinden, der kleiner als ein zweiter Abstand L2 zwischen Verbindungspunkten ist, die die dritten Seiten (58c) und die zweite Seite (58b) verbinden, **dadurch gekennzeichnet, dass** der zweite Abstand L2 nicht kleiner als 1,05 mal und nicht größer als 1,3 mal der erste Abstand L1 ist.

2. Spikestift (50) nach Anspruch 1, wobei,
wenn der untere Flansch (58) aus der ersten Richtung A betrachtet wird, beide Enden (58g) des unteren Flansches (58), die am weitesten in der zweiten Richtung B von der Spitzenanordnungsposition getrennt sind, näher an der zweiten Seite (58a) in der ersten Richtung A als an der ersten Seite (58b) von der Spitzenanordnungsposition liegen.

3. Spikestift (50) nach Anspruch 1, wobei
jede der dritten Seiten (58c) eine Vertiefung einschließt, die zu der Innenseite des unteren Flansches (58) hin vertieft ist.

4. Luftreifen (10), umfassend:
einen Laufflächenabschnitt mit einem Spikestift-Aufnahmeloch (29); und
einen Spikestift (50), der in dem Spikestift-Aufnahmeloch (29) installiert ist;
der Spikestift (50) einschließend:
eine Spitze (52) mit einer Spitzenendoberfläche, die so konfiguriert ist, dass sie mit einer Fahrbahnoberfläche in Kontakt steht; und
einen Rumpfabschnitt (54), der die Spitze (52) hält und sich in einer Richtung erstreckt; und
der Rumpfabschnitt (54) einschließend:
einen oberen Flansch (56), der die Spitze (52) an einem ersten Ende des Rumpfabschnitts (54) fixiert; und
einen unteren Flansch (58), der an einer Position des Rumpfabschnitts (54) auf einer Seite gegenüber des oberen Flansches (56) bereitgestellt ist, wobei ein Rand eine Umfangsform des unteren Flansches (58) definiert, wenn der untere Flansch (58) in einer Verlaufsrichtung des Rumpfabschnitts (54) betrachtet wird, aufweisend:
eine erste Seite (58a) einer Form, die zu einer Außenseite des unteren Flansches (58) hin vorstehend abgerundet ist und in einer ersten Richtung A senkrecht zu der Verlaufsrichtung des Rumpfabschnitts (54) vorsteht, und
eine zweite Seite (58b) auf einer gegenüberliegenden Seite zu der ersten Seite (58a) unter Bezugnahme auf eine Spitzenanordnungsposition, in der die Spitze (52) bereitgestellt ist, wobei sich die zweite Seite (58b) in einer zweiten Richtung B senkrecht zu der ersten Richtung A und der Verlaufsrichtung erstreckt, und
mit einer Vertiefung bereitgestellt ist, die zu einer Innenseite des unteren Flansches (58) hin vertieft ist; und **dadurch gekennzeichnet, dass**
der Spikestift (50) so in das Spikestift-Aufnahmeloch (29) installiert ist, dass die erste Richtung einer Reifenumfangsrichtung C des Luftreifens (10) entspricht.

5. Luftreifen (10) nach Anspruch 4, wobei:
der Luftreifen (10) mit einem Informationsanzeigeglied bereitgestellt ist, das eine Drehrichtung X zur Vorwärtsbewegung bezeichnet, und
der Spikestift (50) so in das Spikestift-Aufnahmeloch (29) installiert ist, dass die erste Richtung der Drehrichtung X
des Luftreifens (10) entspricht.

6. Verfahren zum Herstellen eines Luftreifens (10) mit einem Spikestift (50), der Spikestift (50) einschließend:
eine Spitze (52) mit einer Spitzenendoberfläche, die so konfiguriert ist, dass sie mit einer Fahrbahnoberfläche in Kontakt steht; und
einen Rumpfabschnitt (54), der die Spitze (52) hält und sich in einer Richtung erstreckt; und
der Rumpfabschnitt (54) einschließend:
einen oberen Flansch (56), der die Spitze (52) an einem ersten Ende des Rumpfabschnitts (54) fixiert; und
einen unteren Flansch (58), der an einer Position des Rumpfabschnitts auf einer Seite gegenüber dem oberen Flansch (56) bereitgestellt ist,
einen Rand, der eine Umfangsform des unteren Flansches (58) definiert, wenn der untere Flansch (58) in einer Verlaufsrichtung des Rumpfabschnitts (54) betrachtet wird, aufweisend:
eine erste Seite (58a) einer Form, die zu einer Außenseite des unteren Flansches (58) hin vorstehend abgerundet ist und in einer ersten Richtung A senkrecht zu der Verlaufsrichtung des Rumpfabschnitts (54) vorsteht, und
eine zweite Seite (58b) auf einer Seite, basierend auf einer Spitzenanordnungsposition, in der die Spitze (52) bereitgestellt ist, gegenüber der ersten Seite (58a), wobei sich die zweite Seite (58b) in einer zweiten Richtung B senkrecht zu der ersten Richtung A
und der Verlaufsrichtung erstreckt, und mit einer Vertiefung bereitgestellt ist, die zu einer Innenseite des unteren Flansches (58) hin vertieft ist; und
das Verfahren die Schritte umfasst:
Fertigen eines Luftreifens (10) mit einem Laufflächenabschnitt, in dem ein Spikestift-Aufnahmeloch (29) bereitgestellt ist; **dadurch gekennzeichnet, dass**
der Spikestift (50) in dem Spikestift-Aufnahmeloch (29) durch Halten von drei Positionen auf dem Rand des unteren Flansches (58) des Spikestifts (50) durch drei Halteglieder (70) eines Spikestift-Einsetzapparats und durch Aufweiten des Spikestift-Aufnahmelochs (29) mit Endabschnitten der drei Halteglieder (70) installiert ist, wobei die Halteglieder (70) den unteren Flansch (58) auf der ersten Seite (58a) und der zweiten Seite (58b) halten.

7. Verfahren zum Herstellen eines Luftreifens (10) nach Anspruch 6, wobei
die Haltepositionen, in denen der Rand des Spikestifts (50) durch die Halteglieder (70) gehalten wird, zwei Positionen auf der ersten Seite (58a) und eine Position auf der Vertiefung der zweiten Seite (58b) einschließen.

8. Verfahren zum Herstellen eines Luftreifens (10) nach Anspruch 7, wobei
die Haltepositionen an den zwei Positionen auf der ersten Seite (58a) zwei Spitzen eines gleichschenkligen Dreiecks entsprechen, während die Halteposition auf der zweiten Seite (58b) der anderen Spitze des gleichschenkligen Dreiecks entspricht.

9. Verfahren zum Herstellen eines Luftreifens (10) nach einem der Ansprüche 6 bis 8, wobei
der Spikestift (50) so in das Spikestift-Aufnahmeloch (29) installiert ist, dass die erste Richtung A einer Reifenumfangsrichtung C des Luftreifens (10) entspricht.

10. Verfahren zum Herstellen eines Luftreifens (10) nach einem der Ansprüche 6 bis 8, wobei:
der Luftreifen (10) mit einem Informationsanzeigeglied bereitgestellt ist, das eine Drehrichtung X bezeichnet, und der Spikestift (50) so in das Spikestift-Aufnahmeloch (29) installiert ist, dass die erste Richtung A einer Drehrichtung X des Luftreifens (10) zur Vorwärtsbewegung entspricht.

11. Verfahren zum Installieren eines Spikestifts (50) in einen Luftreifen (10), der Spikestift (50) umfassend:
eine Spitze (52) mit einer Spitzenendoberfläche, die so konfiguriert ist, dass sie mit einer Fahrbahnoberfläche in Kontakt steht; und
einen Rumpfabschnitt (54), der die Spitze (52) hält und sich in einer Richtung erstreckt;
der Rumpfabschnitt (54) einschließend:
einen oberen Flansch (56), der die Spitze (52) an einem ersten Ende des Rumpfabschnitts (54) fixiert; und
einen unteren Flansch (58), der an einer Position des Rumpfabschnitts (54) auf einer Seite gegenüber dem oberen Flansch (56) bereitgestellt ist,
einen Rand, der eine Umfangsform des unteren Flansches (58) definiert, wenn der untere Flansch (58) in einer Verlaufsrichtung des Rumpfabschnitts (54) betrachtet wird, aufweisend:
eine erste Seite (58a) einer Form, die zu einer Außenseite des unteren Flansches (58) hin vorstehend abgerundet ist und in einer ersten Richtung A senkrecht zu der Verlaufsrichtung des Rumpfabschnitts (54) vorsteht, und
eine zweite Seite (58b) auf einer gegenüberliegenden Seite zu der ersten Seite (58a) unter Bezugnahme auf eine Spitzenanordnungsposition, in der die Spitze (52) bereitgestellt ist, wobei sich die zweite Seite (58b) in einer zweiten Richtung B senkrecht zu der ersten Richtung und der Verlaufsrichtung erstreckt und mit einer Vertiefung bereitgestellt ist, die zu einer Innenseite des unteren Flansches (58) hin vertieft ist; das Verfahren umfassend die Schritte:
Anordnen eines Luftreifens (10) mit einem Laufflächenabschnitt, in dem ein Spikestift-Aufnahmeloch (29) an einer vorher festgelegten Position eines Spikestift-Einsetzapparats bereitgestellt ist; und **dadurch gekennzeichnet, dass**
der Spikestift (50) in dem Spikestift-Aufnahmeloch (29) durch Halten von drei Positionen auf dem Rand des unteren Flansches (58) des Spikestifts (50) durch drei Halteglieder (70) des Spikestift-Einsetzapparats und durch Aufweiten des Spikestift-Aufnahmelochs (29) mit Endabschnitten der drei Halteglieder (70) installiert ist,
wobei die Halteglieder (70) den unteren Flansch (58) auf der ersten Seite (58a)
und der zweiten Seite (58b) halten.

12. Verfahren zum Installieren eines Spikestifts (50) nach Anspruch 11, wobei die Haltepositionen, in denen der Rand des Spikestifts (50) durch die Halteglieder gehalten wird, zwei Positionen auf der ersten Seite (58a) und eine Position auf der Vertiefung der zweiten Seite (58b) einschließen.

13. Verfahren zum Installieren eines Spikestifts (50) nach Anspruch 12, wobei die Haltepositionen an den zwei Positionen auf der ersten Seite (58a) zwei Spitzen eines gleichschenkligen Dreiecks entsprechen, während die Halteposition auf der zweiten Seite (58b) der anderen Spitze des gleichschenkligen Dreiecks entspricht.

14. Verfahren zum Installieren eines Spikestifts (50) nach einem der Ansprüche 11 bis 13, wobei
der Spikestift (50) so in das Spikestift-Aufnahmeloch (29) installiert ist, dass die erste Richtung einer Reifenumfangsrichtung C des Luftreifens (10) entspricht.

15. Verfahren zum Installieren eines Spikestifts (50) nach einem der Ansprüche 11 bis 14, wobei:
der Luftreifen (10) mit einem Informationsanzeigeglied bereitgestellt ist, das eine Drehrichtung X zur Vorwärtsbewegung bezeichnet, und der Spikestift (50) so in das Spikestift-Aufnahmeloch (29) installiert ist, dass die erste Richtung A einer Drehrichtung X des Luftreifens (10) entspricht.

## Revendications

1. Goujon (50) configuré pour s'adapter dans un trou d'installation de goujon (29) sur une partie de bande de roulement d'un pneumatique (10), le goujon (50) comprenant :
une pointe (52) ayant une surface d'extrémité de pointe configurée pour entrer en contact avec une surface de route ; et
une partie de tronc (54) maintenant la pointe (52) et s'étendant dans une direction ;
la partie de tronc (54) comprenant :
une bride supérieure (56) fixant la pointe (52) au niveau d'une première extrémité de la partie de tronc (54) ; et
une bride inférieure (58) prévue à une position de la partie de tronc (54) sur un côté opposé à la bride supérieure (56) ;
un bord définissant une forme périphérique de la bride inférieure (58), lorsque la bride inférieure (58) est vue dans une direction d'extension de la partie de tronc (54), ayant :
un premier côté (58a) d'une forme faisant saillie circulairement vers un côté extérieur de la bride inférieure (58), faisant saillie dans une première direction A orthogonale à la direction d'extension de la partie de tronc (54) et
un deuxième côté (58b) prévu sur un côté opposé au premier côté (58a) par rapport à une position d'évacuation de pointe où la pointe (52) est prévue, le deuxième côté (58b) s'étendant dans une deuxième direction B orthogonale à la première direction A et à la direction d'extension et étant pourvu d'un évidement qui est évidé vers un côté interne de la bride inférieure (58) ;
dans lequel le bord de la bride inférieure (58) comprend une paire de troisièmes côtés (58c) s'étendant dans la première direction qui relient le premier côté (58a) et le deuxième côté (58b) ; et une première distance L1 entre des points de connexion qui relient les troisièmes côtés (58c) et le premier côté (58a) est plus courte qu'une deuxième distance L2 entre des points de connexion qui relient les troisièmes côtés (58c) et le deuxième côté (58b), **caractérisé en ce que** la deuxième distance L2 n'est pas inférieure à 1,05 fois et non supérieure à 1,3 fois la première distance L1.

2. Goujon (50) selon la revendication 1, dans lequel,
lorsque la bride inférieure (58) est observée selon la première direction A, les deux extrémités (58g) de la bride inférieure (58) qui sont les plus séparées dans la deuxième direction B de la position d'évacuation de pointe, sont plus proches du deuxième côté (58b) dans la première direction A que du premier côté (58a) depuis la position d'évacuation de pointe.

3. Goujon (50) selon la revendication 1, dans lequel
chacun des troisièmes côtés (58c) comprend un évidement qui est évidé vers le côté intérieur de la bride inférieure (58).

4. Pneumatique (10) comprenant :
une partie de bande de roulement pourvue d'un trou d'installation de goujon (29) ; et
un goujon (50) installé dans le trou d'installation de goujon (29) ;
le goujon (50) comprenant :
une pointe (52) ayant une surface d'extrémité de pointe configurée pour entrer en contact avec une surface de route ; et
une partie de tronc (54) maintenant la pointe (52) et s'étendant dans une direction ; et
la partie de tronc (54) comprenant :
une bride supérieure (56) fixant la pointe (52) au niveau d'une première extrémité de la partie de tronc (54) ; et
une bride inférieure (58) prévue à une position de la partie de tronc (54) sur un côté opposé à la bride supérieure (56), un bord définissant une forme périphérique de la bride inférieure (58), lorsque la bride inférieure (58) est vue dans une direction d'extension de la partie de tronc (54), ayant :
un premier côté (58a) d'une forme faisant saillie circulairement vers un côté extérieur de la bride inférieure (58), faisant saillie dans une première direction A orthogonale à la direction d'extension de la partie de tronc (54) et
un deuxième côté (58b) prévu sur un côté opposé au premier côté (58a) par rapport à une position d'évacuation de pointe où la pointe (52) est prévue, le deuxième côté (58b) s'étendant dans une deuxième direction B orthogonale à la première direction A et à la direction d'extension et
étant pourvu d'un évidement qui est évidé vers un côté intérieur de la bride inférieure (58) ; **et caractérisé en ce que**
le goujon (50) est installé dans le trou d'installation de goujon (29) de telle sorte que la première direction corresponde à une direction circonférentielle C du pneumatique (10).

5. Pneumatique (10) selon la revendication 4, dans lequel :
le pneumatique (10) est muni d'un organe d'affichage d'informations désignant une direction de rotation X pour avancer et
le goujon (50) est installé dans le trou d'installation de goujon (29) de telle sorte que la première direction corresponde à la direction de rotation X
du pneumatique (10).

6. Procédé de fabrication d'un pneumatique (10) avec un goujon (50),
le goujon (50) comprenant :
une pointe (52) ayant une surface d'extrémité de pointe configurée pour entrer en contact avec une surface de route ; et
une partie de tronc (54) maintenant la pointe (52) et s'étendant dans une direction ; et
la partie de tronc (54) comprenant :
une bride supérieure (56) fixant la pointe (52) au niveau d'une première extrémité de la partie de tronc (54) ; et
une bride inférieure (58) prévue à une position de la partie de tronc sur un côté opposé à la bride supérieure (56),
un bord définissant une forme périphérique de la bride inférieure (58), lorsque la bride inférieure (58) est vue dans une direction d'extension de la partie de tronc (54), ayant :
un premier côté (58a) d'une forme faisant saillie circulairement vers un côté extérieur de la bride inférieure (58), faisant saillie dans une première direction A orthogonale à la direction d'extension de la partie de tronc (54) et
un deuxième côté (58b) prévu sur un côté, sur la base d'une position d'évacuation de pointe où la pointe (52) est prévue, opposé au premier côté (58a), le deuxième côté (58b) s'étendant dans une deuxième direction B orthogonale à la première direction A
et à la direction d'extension et étant pourvu d'un évidement qui est évidé vers un côté intérieur de la bride inférieure (58) ; et
le procédé comprenant les étapes consistant à :
fabriquer un pneumatique (10) comprenant une partie de bande de roulement dans laquelle un trou d'installation de goujon (29) est prévu ; **caractérisé par**
l'installation du goujon (50) dans le trou d'installation de goujon (29) en maintenant trois positions sur le bord de la bride inférieure (58) du goujon (50) par trois éléments de maintien (70) d'un appareil d'insertion de goujon et en élargissant le trou d'installation de goujon (29) à l'aide des parties d'extrémité des trois éléments de maintien (70), les éléments de maintien (70) maintenant la bride inférieure (58) sur le premier côté (58a) et le deuxième côté (58b).

7. Procédé de fabrication d'un pneumatique (10) selon la revendication 6, dans lequel
les positions de maintien, dans lesquelles le bord du goujon (50) est maintenu par les éléments de maintien (70) comprennent deux positions sur le premier côté (58a) et une position sur l'évidement du deuxième côté (58b).

8. Procédé de fabrication d'un pneumatique (10) selon la revendication 7, dans lequel
les positions de maintien aux deux positions du premier côté (58a) correspondent à deux pointes d'un triangle isocèle, tandis que la position de maintien du deuxième côté (58b) correspond à l'autre pointe du triangle isocèle.

9. Procédé de fabrication d'un pneumatique (10) selon l'une quelconque des revendications 6 à 8, dans lequel
le goujon (50) est installé dans le trou d'installation de goujon (29) de telle sorte que la première direction A corresponde à une direction circonférentielle C du pneumatique (10).

10. Procédé de fabrication d'un pneumatique (10) selon l'une quelconque des revendications 6 à 8, dans lequel :
le pneumatique (10) est muni d'un élément d'affichage d'informations désignant une direction de rotation X et le goujon (50) est installé dans le trou d'installation de goujon (29) de sorte que la première direction A corresponde à la direction de rotation X du pneumatique (10) d'avancement.

11. Procédé pour installer un goujon (50) dans un pneumatique (10), le goujon (50) comprenant :
une pointe (52) ayant une surface d'extrémité de pointe configurée pour entrer en contact avec une surface de route ; et
une partie de tronc (54) maintenant la pointe (52) et s'étendant dans une direction ;
la partie de tronc (54) comprenant :
une bride supérieure (56) fixant la pointe (52) au niveau d'une première extrémité de la partie de tronc (54) ; et
une bride inférieure (58) prévue à une position de la partie de tronc (54) sur un côté opposé à la bride supérieure (56),
un bord définissant une forme périphérique de la bride inférieure (58), lorsque la bride inférieure (58) est vue dans une direction d'extension de la partie de tronc (54), ayant :
un premier côté (58a) d'une forme faisant saillie circulairement vers un côté extérieur de la bride inférieure (58), faisant saillie dans une première direction A orthogonale à la direction d'extension de la partie de tronc (54) et
un deuxième côté (58b) prévu sur un côté opposé au premier côté (58a) par rapport à une position d'évacuation de pointe où la pointe (52) est prévue, le deuxième côté (58b) s'étendant dans une deuxième direction B orthogonale à la première direction et à la direction d'extension et étant pourvu d'un évidement qui est évidé vers un côté interne de la bride inférieure (58) ; et le procédé comprenant les étapes consistant à :
disposer un pneumatique (10) comprenant une partie de bande de roulement dans laquelle un trou d'installation de goujon (29) est prévu, en une position prédéterminée d'un appareil d'insertion de goujon ; **et caractérisé en ce que**
l'installation du goujon (50) dans le trou d'installation de goujon (29) en maintenant trois positions sur le bord de la bride inférieure (58) du goujon (50) par les trois éléments de maintien (70) de l'appareil d'insertion de goujon et l'élargissement du trou d'installation de goujon (29) à l'aide des parties d'extrémité des trois éléments de maintien (70),
les éléments de maintien (70) maintenant la bride inférieure (58) au niveau du premier côté (58a)
et du deuxième côté (58b).

12. Procédé pour installer un goujon (50) selon la revendication 11, dans lequel les positions de maintien, dans lesquelles le bord du goujon (50) est maintenu par les éléments de maintien comprennent deux positions sur le premier côté (58a) et une position sur l'évidement du deuxième côté (58b).

13. Procédé pour installer un goujon (50) selon la revendication 12, où les positions de maintien sur les deux positions du premier côté (58a) correspondent à deux pointes d'un triangle isocèle, tandis que la position de maintien du deuxième côté (58b) correspond à l'autre pointe du triangle isocèle.

14. Procédé pour installer un goujon (50) selon l'une quelconque des revendications 11 à 13, dans lequel
le goujon (50) est installé dans le trou d'installation de goujon (29) de telle sorte que la première direction A corresponde à une direction circonférentielle C du pneumatique (10).

15. Procédé pour installer un goujon (50) selon l'une quelconque des revendications 11 à 14, dans lequel :
le pneumatique (10) est muni d'un élément d'affichage d'informations désignant une direction de rotation X et le goujon (50) est installé dans le trou d'installation de goujon (29) de sorte que la première direction A corresponde à la direction de rotation X du pneumatique (10).
